# EUROPÄISCHE PATENTSCHRIFT

(11) **EP 2 936 515 B1**
(45) Veröffentlichungstag und Bekanntmachung des Hinweises auf die Patenterteilung: **05.12.2018**
(21) Anmeldenummer: 13805920.9
(22) Anmeldetag: 17.12.2013
(51) Int. Cl.: H01F 27/30, H01F 5/02, H01F 5/04, H01F 17/04, H01F 41/06, H01F 41/098, G01D 5/20

(54) **VERFAHREN ZUM HERSTELLEN EINES MESSAUFNEHMERS**
METHOD FOR PRODUCING A MEASUREMENT TRANSMITTER
PROCÉDÉ DE PRODUCTION D'UN CAPTEUR DE MESURE

(30) Priorität: 20.12.2012 DE 102012224101
(43) Veröffentlichungstag der Anmeldung: 28.10.2015
(73) Patentinhaber: Continental Teves AG & Co. OHG, 60488 Frankfurt am Main (DE)
(72) Erfinder: SCHILLINGER, Jakob, 85080 Gaimersheim (DE); HUBER, Dietmar, 63322 Rödermark (DE); GRUNWALD, Frank, 61440 Oberursel (DE); MÜLLER, Hilmar, 35452 Heuchelheim (DE)
(86) Internationale Anmeldenummer: PCT/EP2013/076930
(87) Internationale Veröffentlichungsnummer: WO 2014/095884

(56) Entgegenhaltungen:
- EP-A1- 0 893 699
- EP-A2- 1 806 756
- DE-A1- 10 139 839
- US-A- 5 883 511
- US-A1- 2003 156 002
- US-A1- 2008 169 894

## Beschreibung

Die Erfindung betrifft ein Verfahren zum Herstellen eines Messaufnehmers und den Messaufnehmer.

Aus der DE 101 30 572 A1 ist ein induktiver Messaufnehmer für einen Positionssensor bekannt, der basierend auf einem Magnetfeld eines Geberelementes, das von der Position des Geberelementes abhängig ist, ein elektrisches Signal an eine Auswerteschaltung ausgibt.

US 2008/169894 offenbart ein Verfahren zum Herstellen einer Spule als Messaufnehmer für einen Sensor, umfassend: Anordnen elektrischer Anschlüsse und eines magnetischen Kerns für die Spule, Formen eines Spulenkörpers um den magnetischen Kern derart, dass der magnetische Kern vom Spulenkörper wenigstens teilweise umhüllt wird, Wickeln wenigstens eines Spulendrahtes auf den geformten Spulenkörper, und Verbinden des gewickelten Spulendrahtes mit den elektrischen Anschlüssen.

Es ist Aufgabe der Erfindung, den bekannten induktiven Messaufnehmer zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Herstellen einer Spule als Messaufnehmer für einen Sensor die Schritte Anordnen elektrischer Anschlüsse und eines magnetischen Kerns für die Spule, Formen eines Spulenkörpers um den magnetischen Kern derart, dass der magnetische Kern vom Spulenkörper wenigstens teilweise umhüllt und die elektrischen Anschlüsse vom Spulenkörper gehalten werden, Wickeln wenigstens eines Spulendrahtes auf den geformten Spulenkörper und Verbinden des gewickelten Spulendrahtes mit den elektrischen Anschlüssen.

Dem angegebenen Verfahren liegt die Überlegung zugrunde, dass der Spulenkörper des Messaufnehmers beispielsweise durch Spritzgießen vorab gefertigt werden könnte, wobei der magnetische Kern dann in dem vorab gefertigten Spulenkörper beispielsweise durch Verkleben gehalten werden könnte.

Dem angegebenen Verfahren liegt jedoch die Erkenntnis zugrunde, dass diese Herstellungsweise sehr aufwändig wäre, da hier zumindest der Verklebeschritt des magnetischen Kerns am Spulenkörper mit technisch aufwändigen Mitteln realisiert werden müsste.

Demgegenüber liegt dem angegebenen Verfahren die Idee zugrunde, den Spulenkörper so zu fertigen, dass der magnetische Kern durch einen Formschluss im Spulenkörper gehalten wird. Dazu wird der magnetische Kern von Spulenkörper wenigstens teilweise umhüllt, so dass er aus dem Spulenkörper durch den sich so bildenden Formschluss nicht mehr herausfallen kann.

Auf diese Weise kann auf den zuvor genannten Verklebeschritt der Herstellung des Messaufnehmers verzichtet werden.

In einer Weitebildung des angegebenen Verfahrens wird der Spulenkörper mittels eines Spritzpressvorgangs (engl. transfer molding genannt) geformt.

In einer besonderen Weiterbildung umfasst der Spulenkörper ein duroplastisches Material, insbesondere ein Harzsystem. Dabei kann der gesamte Spulenkörper aus dem duroplastischen Material ausgebildet sein. Ein duroplastisches Material weist einen besonders niedrigen Wärmeausdehnungskoeffizienten auf und schrumpft nach dem Spritzpressvorgang kaum. Auf diese Weise kann nicht nur ein thermischer Missmatch zwischen den Komponenten des Messaufnehmers vermieden werden, was zu geringeren thermisches Spannungen bei Temperaturwechseln in der Umgebungstemperatur des Messaufnehmers führt, die so die Zyklenfestigkeit des Messaufnehmers im Rahmen dieser Temperaturwechsel erhöhen. Der veringerte Schrumpf des duroplastischen Materials während der Aushärtung nach dem Spritzpressvorgang führt auch zu geringeren inneren mechanischen Verspannungen auf den magnetischen Kern sowie zu einer Spaltfreiheit zwischen dem aufgewickelten Spulendraht und dem Spulenkörper, was ein geringeres Korrosionsrisiko für den Spulendraht darstellt. Zudem haftet das duroplastische Material optimal an den elektrischen Anschlüssen und führt so zu einer besonders dichten Verbindung zwischen den elektrischen Anschlüssen und dem Spulenkörper, was wiederrum das Risiko eines Drahtrisses und Korrosion reduziert.

Das duroplastische Material kann dabei vorzugsweise ein Epoxidharzsystem, ein Phenolformaldehydharzsystem, ein Melaminformaldehydharzsystem, ein ungesättigtes Polyestherharzsystem, oder ein anderen rieselfähiges Harzsystem umfassen oder daraus ausgebildet sein. Rieselfähige Harzsysteme werden dabei in Granulatform geliefert und können im oben genannten Spritzpressvorgang verarbeitet werden. Dabei kann ein rieselfähiges Harzsystem wie bei der Thermoplastverarbeitung über eine konventionelle Materialzuführung gefördert werden. Darüber hinaus bieten rieselfähige Harzsysteme eine gute Dimensionsstabilität, eine hohe Dauereinsatztemperatur, gute chemische Beständigkeit, gute mechanische Eigenschaften, ein wirtschaftliches Preisleistungsverhältnis, gute elektrische Eigenschaften und können mit ausgereiften Maschinen- und Verfahrenstechniken verarbeitet werden.

Alternativ können jedoch auch sogenannte nichtrieselfähige Harzsysteme verwendet werden, unter die beispielsweise Bulk Molding Compounds, BMC genannt fallen, die beispielsweise auf Basis eines ungesättigten Polyestherharzsystems hergestellt werden können. Im Einzelnen kann BMC ein glasfaserverstärkter Feuchtpolyesther sein. Nichtrieselfähige Harzsysteme können in Ballenform geliefert werden und weisen im Wesentlichen dieselben positiven Eigenschaften wie die rieselfähigen Harzsysteme auf.

Der magnetische Kern kann in beliebiger Weise in den Spulenkörper aufgenommen werden. So kann der magnetische Kern im Rahmen des Spritzpressvorgangs in den Spulenkörper beispielsweise eingeschlossen werden. Der Spritzpressvorgang kann alternativ aber auch als Premoldvorgang durchgeführt werden, im Rahmen dessen ein Aufnahmekörper mit einer Ausnehmung geformt wird. In diese Ausnehmung, die beispielsweise in Form einer Mulde ausgebildet werden kann, kann dann der magnetische Kern eingelegt werden. Abschließend kann die Ausnehmung mit dem aufgenommenen magnetischen Kern verschlossen werden. Die Ausnehmung dient somit als Raum in dem der magnetische Kern bestückt werden kann. Dadurch wird das Material des magnetischen Kerns gegen hohe Temperaturgradienten und hohe Spitzentemperaturen von ca. 175°C während des Spritzpressvorgangs geschützt. Zudem werden keine Kräfte bei Temperaturänderungen auf den magnetischen Kern übertragen.

Als magnetischer Kern können weichmagnetische Werkstoffe, wie beispielsweise Eisen-Nickel-Magnete mit und ohne Magnetostriktionsfreiheit gewählt werden. Unter einer Magnetostriktion soll nachstehend die Änderung magnetischer Kenngrößen wie magnetische Feldstärke, magnetische Flussdichte oder magnetische Permeabilität durch eine mechanische Beanspruchung wie Druck oder Zugspannung verstanden werden. Durch das spannungsfreie Einlegen des magnetischen Kerns in die Ausnehmung kann die Magnetostriktion vermieden werden.

Das Material des magnetischen Kerns kann einlagig aber auch mehrlagig ausgeführt sein.

In einer Weiterbildung kann das angegebene Verfahren den Schritt Auflegen eines mechanischen Enkopplungsmaterials auf den magnetischen Kern vor dem Verschließen der Ausnehmung umfassen, wodurch der magnetische Kern weiter mechanisch vom Spulenkörper entkoppelt, so dass Druckbelastungen auf den magnetischen Kern weitestgehend unterbunden werden. Alternativ oder zusätzlich kann die Ausnehmung vor oder nach dem Einlegen des magnetischen Kerns auch mit einem elastischen Vergussmaterial, wie beispielsweise einem an sich bekannten Silgel aufgefüllt werden.

Der Verschluss der Ausnehmung kann mit einem Deckel erfolgen, der beispielsweise stoffschlüssig (geklebt), kraftschlüssig (geklemmt) oder formschlüssig (geschnappt) in die Ausnehmung eingesetzt werden kann.

Unabhängig davon, ob der magnetische Kern nun in einen im Rahmen eines Premold-Prozesses vorab hergestellten Spulenkörper eingesetzt oder bei der Herstellung des Spulenkörpers umgossen oder umspritzt wird, können die Enden des Spulendrahtes nach dem Aufwickeln auf den Spulenkörper zum Verbinden des gewickelten Spulendrahtes mit den elektrischen Anschlüssen um die elektrischen Anschlüsse gewickelt werden. Zur Befestigung und gleichzeitigen verbesserten elektrischen Kontaktierung können die Enden des Spulendrahtes alternativ oder zusätzlich an den elektrischen Anschlüssen verschweißt, verlötet oder verklebt werden. werden.

Dabei kann der elektrische Anschluss zur mechanischen Entlastung des Spulendrahtes nach dem Verbinden des gewickelten Spulendrahtes mit dem elektrischen Anschluss in eine Richtung des Spulendrahtes gebogen werden, damit der Spulendraht auf Zug entlastet und die Wickelspannung aus dem Spulendraht genommen wird.

In einer besonderen Weiterbildung umfasst das angegebene Verfahren dabei die Schritte Anordnen eines Umlenkpins auf dem Spulenkörper und Verbinden des gewickelten Spulendrahtes mit den elektrischen Anschlüssen über den Umlenkpin. Die Weiterbildung ist besonders günstig im Zusammenhang mit dem gebogenen elektrischen Anschluss, da hier die Entspannung besser wirken kann.

In einer weiteren alternativen Weiterbildung umfasst das angegebene Verfahren den Schritt Formen eines Gehäusekörpers um den Spulenkörper mit dem gewickelten und mit den elektrischen Anschlüssen verbundenen Spulendraht. Der Gehäusekörper schützt den Spulendraht und seine elektrische Verbindung mit den elektrischen Anschlüssen vor mechanischen Belastungen und/oder Verschleißeinflüssen wie Korrosion.

Das Material des Gehäusekörpers kann dabei den Umweltbedingungen des zu schaffenden Messaufnehmers entsprechend gewählt werden. Besonders bevorzugt sollte der Spulenkörper und der Gehäusekörper aus einem Material mit einem gleichen Wärmeausdehnungskoeffizienten, insbesondere aus einem gleichen Material ausgebildet werden. Auf diese Weise können Wärmebewegungen des Spulenkörpers und des Gehäusekörpers aufeinander abgestimmt werden, was zu einer weiteren Reduktion an mechanischen Verspannungen führt.

In einer bevorzugten Weiterbildung umfasst das angegebene Verfahren den Schritt Anordnen eines elektrisch leitfähigen Blechs zwischen einem Kontaktierpunkt der elektrischen Anschlüsse mit einer Leiterplatte und dem Spulenkörper, wobei der Gehäusekörper um das leitfähige Blech geformt wird. Das elektrisch leitfähige Blech kann als Rückleitblech mechanisch mit dem Spulenkörper verbunden oder unmittelbar vor dem Spritzpressvorgang zur Herstellung des Gehäusekörpers in ein entsprechendes Spritzpresswerkzeug eingesetzt werden, so dass das elektrisch leitfähige Blech zwischen dem Gehäusekörper und dem Spulenkörper oder im Gehäusekörper eingebettet wird. Das Rückleitblech definiert auf diese Weise eine zusätzliche mechanische Versteifung der Spritzpressteile des Messaufnehmers, also des Spulenkörpers und des Gehäusekörpers und kann die elektromagnetische Verträglichkeit des Messaufnehmers in einer elektronischen Schaltung mit dem Messaufnehmer spürbar steigern. Ferner können durch das elektrisch leitfähige Blech Abstände definiert vorgegeben werden.

Die elektrischen Anschlüsse können elektronikseitig, also an der Stelle, an denen sie mit einer Leiterplatte elektrisch kontaktiert werden sollen, einer beliebigen Verbindungstechnik angepasst werden. Hier können beispielsweise pin in paste, Surface-mount technology (SMT genannt), Einpressen, Schweißen, Splicen, oder Kleben zur Anwendung kommen.

Die elektrischen Anschlüsse können bei der Herstellung des Messaufnehmers in ans sich bekannter Weise beispielsweise über Streben miteinander verbunden sein, so dass der Messaufnehmer schlussendlich von diesen Streben beispielsweise durch Stanzen getrennt werden muss. Vor diesem anschließenden Trennen können jedoch auf den Messaufnehmer, beispielsweise auf den Gehäusekörper ein Barcode oder ein digitaler Matrixcode, DMC genannt, aufgebracht werden, über den der Messaufnehmer elektronisch hinsichtlich Typ, technischen Daten oder Ähnlichem erkannt werden kann.

Zur Vereinfachung der Bestückung des Messaufnehmers auf einer Leiterplatte können auf dem Gehäusekörper noch Formelemente aufgebracht werden, die von einem Bestückungswerkzeug verwendet werden können. Wird der Messaufnehmer beispielsweise als an sich bekanntes surface mounted device, SMD genannt, verwendet, dann der Gehäusekörper mit mindestens einer planaren Fläche ausgebildet werden, an die in an sich bekannter Weise eine Saugdüse eines SMD-Bestückers angreifen kann, um den Messaufnehmer direkt greifen und auf der Leiterplatte bestücken zu können.

Gemäß einem weiteren Aspekt der Erfindung ist ein Messaufnehmer mit einem angegebenen Verfahren hergestellt. Der Messaufnehmer muss dabei nicht eine einzige Spule aufweisen, sondern kann mit mehreren Spulen gewickelt werden, wie sie beispielsweise in einem linearen Positionssensor, LIPS genannt zum Einsatz kommen.

Gemäß einem weiteren Aspekt der Erfindung umfasst ein Sensor einen angegebenen Messaufnehmer und ein Geberelement, vorzugsweise in Form eines Magneten, das relativ zum Messaufnehmer beweglich angeordnet ist.

Der angegebene Sensor ist besonders bevorzugt ein linearer Positionssensor, LIPS genannt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 einen Tandemhauptzylinder mit einem Wegsensor zeigen,
Fig. 2 den Wegsensor aus Fig. 1,
Fig. 3 einen Wandler im Wegsensor aus Fig. 2 in einem ersten Produktionszustand,
Fig. 4 einen Wandler im Wegsensor aus Fig. 2 in einem zweiten Produktionszustand,
Fig. 5 einen Wandler im Wegsensor aus Fig. 2 in einem alternativen zweiten Produktionszustand,
Fig. 6 den Wandler aus Fig. 2 in einem finalen Produktionszustand,
Fig. 7 einen Endbereich des Wandlers im zweiten Produktionszustand, und
Fig. 8 eine alternative Ansicht des Endbereich des Wandlers im zweiten Produktionszustand aus Fig. 7 zeigen.

In den Figuren werden gleiche technische Elemente mit gleichen Bezugszeichen versehen und nur einmal beschrieben.

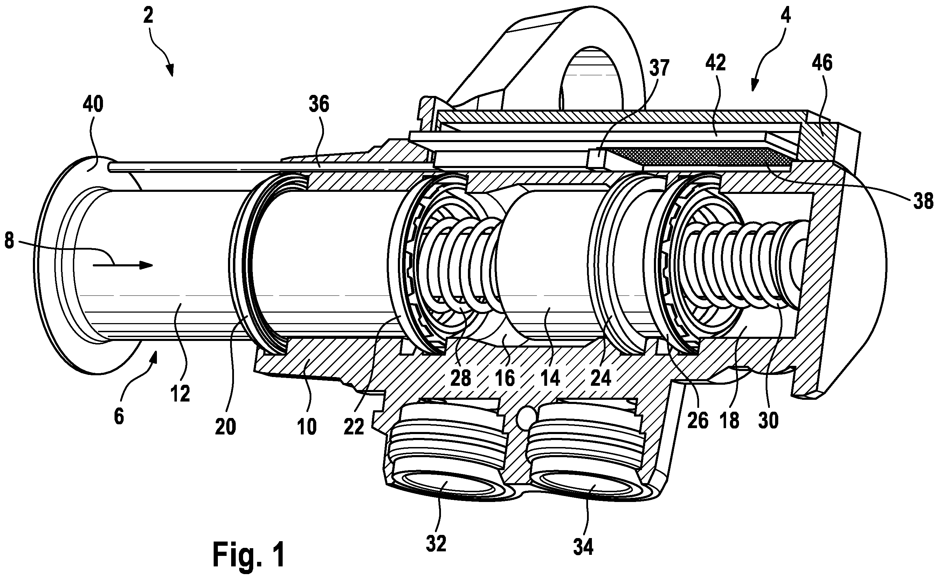

Es wird auf Fig. 1 Bezug genommen, die einen Tandemhauptzylinder 2 mit einem Wegsensor 4 zeigt.

Der Tandemhauptzylinder 2 weist ferner einen Druckkolben 6 auf, der in einer Bewegungsrichtung 8 in einem Gehäuse 10 beweglich angeordnet ist, wobei die Bewegung des Druckkolbens 6 durch ein nicht gezeigtes Fußpedal gesteuert werden kann. Der Druckkolben 6 selbst ist in einen Primärkolben 12 und einen Sekundärkolben 14 unterteilt, wobei der Primärkolben 12 einen Eingang des Gehäuses 10 verschließt und der Sekundärkolben 12 den Innenraum des Gehäuses 10 in eine Primärkammer 16 und eine Sekundärkammer 18 unterteilt. Im Bereich des Eingangs des Gehäuses 10 ist am Primärkolben 12 eine Sekundärmanschette 20 angeordnet, die den Innenraum des Gehäuses 10 von der Umgebungsluft isoliert. In den Innenraum des Gehäuses 10 hinein gesehen folgt nach der Sekundärmanschette 20 eine Primärmanschette 22, die einen Spalt zwischen dem Primärkolben 12 und einer Wand des Gehäuses 10 abdichtet. Eine Druckmanschette 24 am Sekundärkolben 14 isoliert den Druck der Primärkammer 16 vom Druck der Sekundärkammer 18. Ferner dichtet eine weitere Primärmanschette 26 am Sekundärkolben 14 einen Spalt zwischen dem Sekundärkolben 14 und der Wand des Gehäuses 10 ab. Der Primärkolben 12 ist gegen den Sekundärkolben 14 über eine erste Feder 28 abgestützt, während der Sekundärkolben gegen einen Gehäuseboden über eine zweite Feder 30 abgestützt ist. Über einen ersten und zweiten Anschluss 32, 34 können entsprechend die Primärkammer 16 und die Sekundärkammer 18 mit nicht gezeigter Hydraulikflüssigkeit versorgt werden.

Da dem Fachmann die Funktionsweise eines Tandemhauptzylinders bekannt ist, soll auf eine detaillierte Darstellung dieser verzichtet werden.

Der Wegsensor 4 weist einen Probekörper in Form eines Schiebers 36 mit einem Gebermagneten 37 an seinem Kopfende auf, der in die Bildebene hinein betrachtet unter einen noch zu beschreibenden Sensorschaltkreis 38 geschoben werden kann. Zum Schieben des Schiebers 36 weist der Primärkolben 12 einen Flansch 40 auf, an dem der Schieber 36 gegengelagert ist. Der Flansch 40 und der Primärkolben 12 bilden damit gemeinsam ein Messobjekt, dessen Position durch die noch zu beschreibenden Sensorschaltkreis 38 des Wegsensors 4 ermittelt wird. Der Sensorschaltkreis 38 ist aus mehreren Leiterbahnen auf einem Verdrahtungsträger 42, wie einem Leadframe, einer Leiterplatte oder einem anderen Substrat gebildet. Auf die Leiterplatte 42 mit dem Sensorschaltkreis 38 kann zum Schutz beispielsweise vor Schmutz ein Deckel 46 aufgelegt sein.

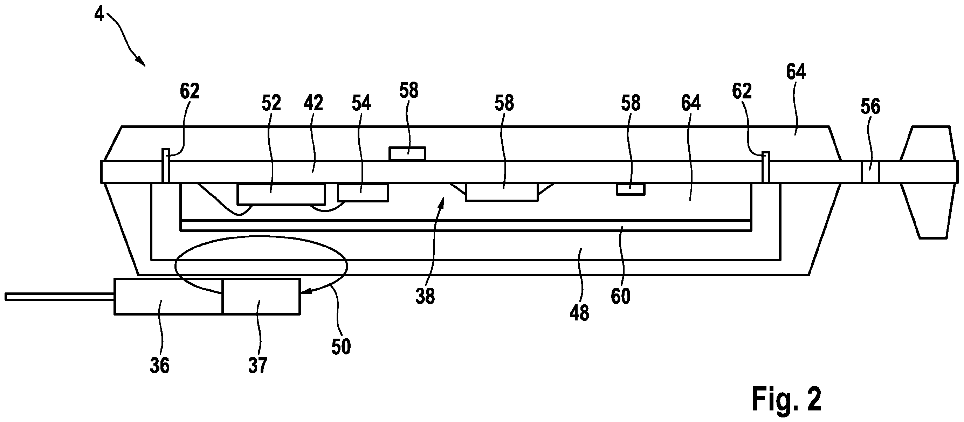

Es wird auf Fig. 2 Bezug genommen, die den Wegsensor 4 aus Fig. 1 zeigt.

Der Schaltkreis 38 des Wegsensors umfasst einen Wandler 48, der in der vorliegenden Ausführung als linearer induktiver Positionssensor, LIPS genannt ausgebildet ist. Der Wandler 48 erfasst ein magnetisches Feld 50 des Gebermagneten 37 und gibt darauf basierend ein nicht näher referenziertes elektrisches Gebersignal an den Schaltkreis 38 aus. Dieses Gebersignal wird von einem ersten Signalverarbeitungschip 52 und einem zweiten Signalverarbeitungschip 54 in ein nicht näher referenziertes Messsignal umgewandelt, aus dem die Lage des Schiebers 36 und damit die Lage des Flansches 40 und des Primärkolbens 12 hervorgeht. Das so erzeugte Messsignal kann abschließend an einer Sendeschnittstelle 56 des Wegsensors 4 über ein nicht weiter dargestelltes Kabel abgegriffen und zu einer nicht weiter dargestellten höheren Signalverarbeitungseinheit wie beispielsweise einer Motorsteuerung in einem nicht weiter dargestellten Fahrzeug weitergeleitet werden.

Der Schaltkreis 38 kann Schutzelemente 58 zum Schutz der beiden Signalverarbeitungschips 52, 54 beispielsweise vor einer Überspannung umfassen. Ferner kann zwischen dem Schaltkreis 38 und dem Wandler 48 eine Abschirmplatte 60 angeordnet sein, die elektromagnetische Felder zwischen dem Schaltkreis 38 und dem Wandler 38 abschirmt und so einen Einfluss des Schaltkreises 38 auf den Wandler 48 vermeidet.

In der vorliegenden Ausführung ist der Wandler 48 über einen Formschluss 62 in einer definierten Lage auf dem Verdrahtungsträger 42 angeordnet. Dabei den Verdrahtungsträger 42 und den Wandler 48 eine Schutzmasse 64, die den Verdrahtungsträger 42 und den Wandler 48 mechanisch zusammenhält. Auf diese Weise kann die Schutzmasse 64 nicht nur eine mechanische Stabilität zwischen dem Verdrahtungsträger 42 und dem Wandler 48 gewährleisten, ein Innenraum des Wegsensors 4 mit dem Schaltkreis 38 ist auch wirksam vor Verschmutzung geschützt. Dabei kann dieser Innenraum besonders bevorzugt ebenfalls mit der Schutzmasse 64 ausgefüllt sein.

Der Wegsensor 4 kann bei der Herstellung mit der Schutzmasse 64 beispielsweise umspritzt werden. Dazu kann der Verdrahtungsträger 42 des Wegsensors 4 beispielsweise an der Sendeschnittstelle 56 gehalten werden, die zur elektrischen Kontaktierung mit dem oben genannten Kabel ohnehin frei bleiben muss.

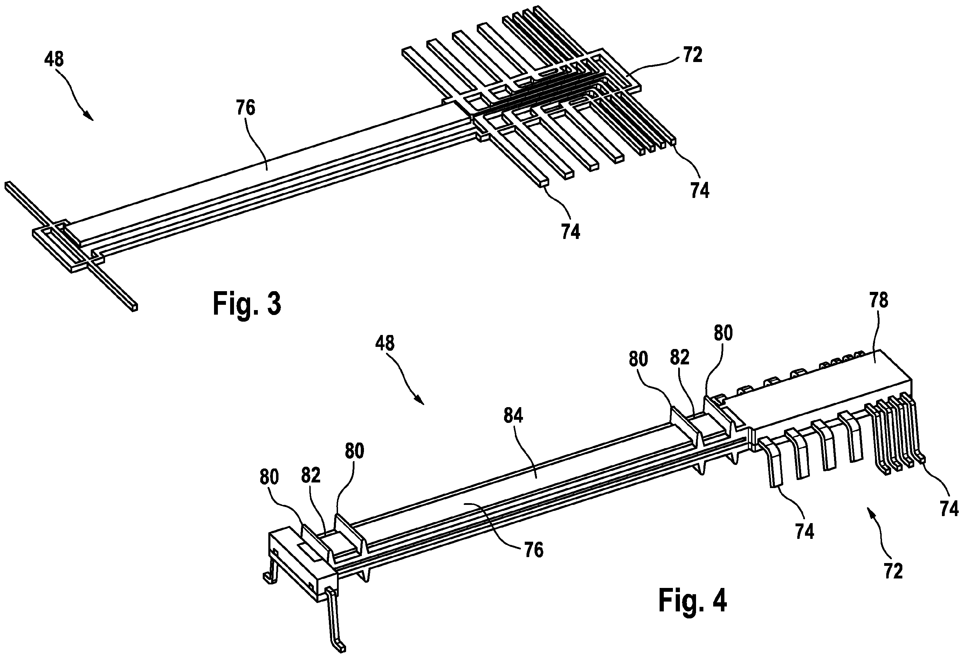

Es wird auf Fig. 3 Bezug genommen, die den Wandler 48 im Wegsensor 4 aus Fig. 2 in einem ersten Produktionszustand zeigt.

Zur Herstellung des als LIPS auszubildenden Wandlers 48 wird für den ersten Produktionszustand ein Leadframe 72 mit Kontaktbeinchen 74 ausgestanzt, der den Wandler 48 auf dem oben genannten Verdrahtungsträger 42 mechanisch abstützen und ihn mit dem Schaltkreis 38 auf dem Verdrahtungsträger 42 elektrisch kontaktiert. Von den Kontaktbeinchen 74 sind in Fig. 3 der Übersichtlichkeit halber nur einige mit einem Bezugszeichen versehen.

Anschließend wird in dem Leadframe 72 ein magnetischer Kern 76 angeordnet, der später zur Übertragung eines magnetischen Feldes zwischen noch zu beschreibenden Spulen vorgesehen ist.

Es wird auf Fig. 4 Bezug genommen, die den Wandler 48 im Wegsensor 4 aus Fig. 2 in einem zweiten Produktionszustand zeigt.

Zur Herstellung des in Fig. 4 gezeigten zweiten Produktionszustandes wird der Leadframe 72 mit dem magnetischen Kern 76 mit einer Wandlerschutzmasse 78 umhüllt. Diese Wandlerschutzmasse 78 besteht in der vorliegenden Ausführung aus Duroplast, das einen im Wesentlichen gleichen Ausdehnungskoeffizienten wie der magnetische Kern 76 aufweist, der beispielsweise aus Eisen-Nickel hergestellt sein kann. Im Falle von Temperaturschwankungen werden so kaum mechanische Spannungen in den magnetischen Kern 76 eingetragen.

Die Wandlerschutzmasse 78 wird dabei mit vier Trennelementen 80 ausgebildet, dass sie den magnetischen Kern 76 in zwei äußere Wickelbereiche 82 und einen inneren Wickelbereich 84 unterteilen. Dabei sind die äußeren Wickelbereiche 82 kürzer ausgebildet, als der innere Wickelbereich 84.

Anschließend, wenn die Wandlerschutzmasse 78 beispielsweise ausgehärtet ist, können die Kontaktbeinchen 74 dann wie in Fig. 4 gezeigt in Richtung einer Unterseite des Wandlers 48 gebogen werden.

Zur Fertigstellung des Wandlers 48 werden in die Wickelbereiche 82, 84 auf den Wandler nicht weiter dargestellte Spulendrähte aufgewickelt. Eine Primärspule wird dabei über alle Wickelbereiche 82, 84 hinweg aufgewickelt, während in je einen der äußeren Wickelbereiche 82 eine baugleiche Sekundärspule aufgewickelt wird.

Im Betrieb des Wandlers wird beispielsweise an die Primärspule ein elektrisches Wechselspannungssignal angelegt, das über den magnetischen Kern 76 in den baugleichen Sekundärspulen ein identisches Ausgangssignal induzieren sollte.

Nähert sich jetzt der Gebermagnet 37 des Schiebers 36 einer der beiden Sekundärspulen, so treibt er den magnetischen Kern 76 in die Sättigung. Dies führt zu einem veränderten Übertragungsverhalten des elektrischen Wechselspannungssignals zwischen der Primärspule und der entsprechenden Sekundärspule, dem sich der Gebermagnet 37 genähert hat, was in einer dem Fachmann bekannten Weise über den Sensorschaltkreis ausgewertet werden kann. Auf diese Weise kann die Position des Gebermagneten 37 über dem Wandler 48 erfasst werden.

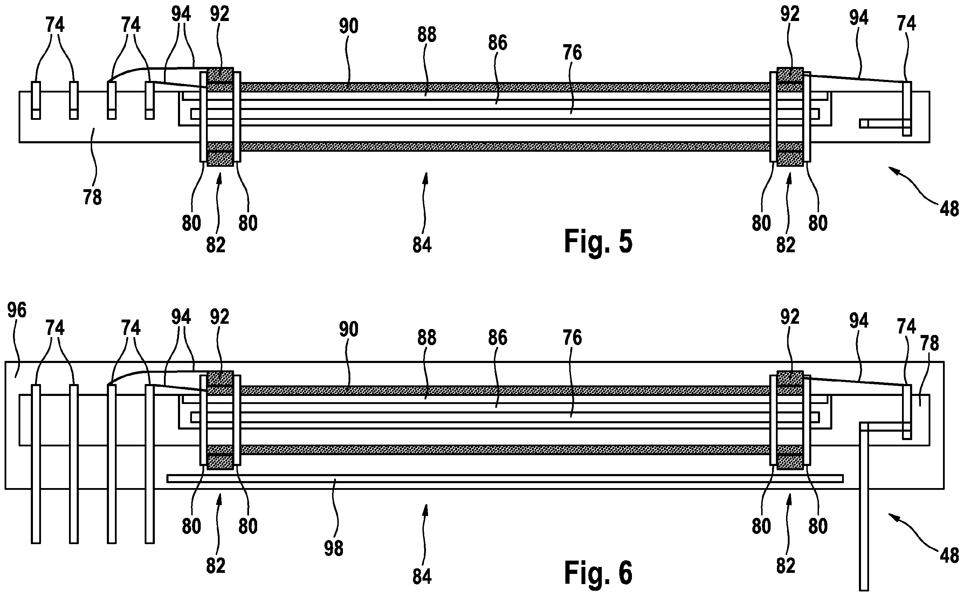

Es wird auf Fig. 5 Bezug genommen, die den Wandler 48 im Wegsensor 4 aus Fig. 2 in einem alternativen zweiten Produktionszustand in einer Schnittansicht zeigt.

Zur Herstellung des in Fig. 5 gezeigten alternativen zweiten Produktionszustandes wird zunächst die Wandlerschutzmasse 78 als Aufnahmekörper beispielsweise mittels eines Spritzpressvorgangs aus einem duroplastischen Material mit dem Leadframe 72 und einer Ausnehmung in Form einer Mulde 86 geformt, in die der magnetische Kern 76 eingelegt wird. Die Mulde 86 wird anschließend mit einem Deckel 88 verschlossen.

Die in Fig. 5 gezeigten Trennelemente 80 sind dabei in der vorliegenden Ausführung beispielhaft als eigene Elemente ausgebildet, die über den mit dem Deckel 88 verschlossenen Aufnahmekörper aus der Wandlerschutzmasse 78 geschoben sind.

Anschließend werden analog zu Fig. 4 in die Wickelbereiche 82, 84 auf den Wandler Spulendrähte 90, 92 aufgewickelt. Die Primärspule 90 wird dabei über alle Wickelbereiche 82, 84 hinweg aufgewickelt, während in je einen der äußeren Wickelbereiche 82 eine baugleiche Sekundärspule 92 aufgewickelt wird.

Anschließend, wenn die Wandlerschutzmasse 78 beispielsweise ausgehärtet ist, können die Kontaktbeinchen 74 des Leadframes 72 dann wie in Fig. 6 gezeigt in Richtung einer Unterseite des Wandlers 48 gebogen werden.

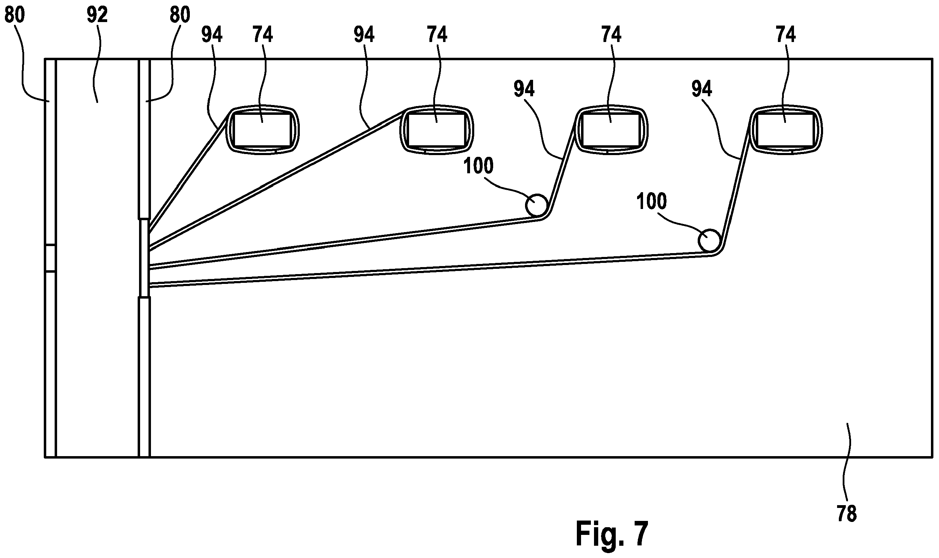

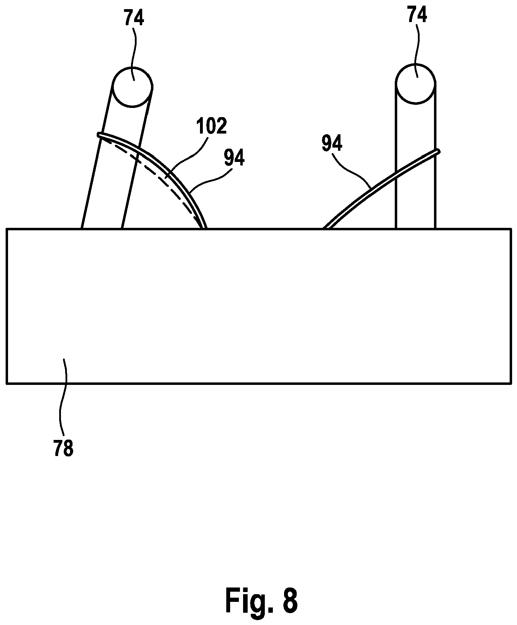

Vor oder nach dem Biegen der Kontaktbeinchen 74 können die Enden der Drähte 94 der Primärspule 90 und der Sekundärspulen 92 elektrisch mit den Kontaktbeinchen 74 verbunden werden, worauf im Rahmen der Fig. 7 und 8 näher eingegangen wird.

Der Betrieb des Wandlers 48 funktioniert in der gleichen Weise, wie der im Rahmen der Fig. 5 beschriebene Wandler.

Der Wandler 48 der Fig. 3 oder der Fig. 5 kann abschließend in einem Gehäusekörper 96 aufgenommen werden, was in Fig. 6 basierend auf dem in Fig. 5 gezeigten Wandler 48 beispielhaft dargestellt ist. Dieser Gehäusekörper 96 kann den Wandler 48 vollumfänglich umschließen und so als Schutz vor Umwelteinflüssen dienen.

Zur Steigerung der elektromagnetischen Verträglichkeit des Wandlers 48 und zur Steigerung seiner mechanischen Steifigkeit kann in dem Gehäusekörper 96 ein elektrisch leitfähiges Rückleitblech 98 vergossen sein.

Zum elektrischen Kontaktieren der Enden der Drähte 94 der Primärspule 90 und der Sekundärspulen 92 können die Enden der Drähte 94, wie in Fig. 7 gezeigt, um die Kontaktbeinchen 74 gewickelt und anschließend beispielsweise durch Verlöten elektrisch kontaktiert werden.

Zur besseren räumlichen Trennung der einzelnen Drähte 94 können in der Wandlerschutzmasse 78 ferner Umlenkpins 100 angeordnet werden.

Ferner können die Kontaktbeinchen 74 nach dem Wickeln der Drähte 94 um die Kontaktbeinchen 74, wie in Fig. 8 gezeigt, in Richtung der Drähte 94 gebogen werden, wodurch ein in Fig. 8 angedeuteter mechanischer Entspannungsbereich 102 erzeugt wird, der die Drähte 94 auf Zug entspannt.

## Patentansprüche

1. Verfahren zum Herstellen einer Spule (90, 92) als Messaufnehmer für einen Sensor (4), umfassend:
- Anordnen elektrischer Anschlüsse (74) und eines magnetischen Kerns (76) für die Spule (90, 92),
- Formen eines Spulenkörpers (78, 88) um den magnetischen Kern (76) durch einen Mold-Vorgang derart, dass der magnetische Kern (76) vom Spulenkörper (78, 88) wenigstens teilweise umhüllt und der magnetische Kern durch einen Formschluss im Spulenkörper gehalten wird, und die elektrischen Anschlüsse (74) vom Spulenkörper (78, 88) gehalten werden,
- Wickeln wenigstens eines Spulendrahtes (94) auf den geformten Spulenkörper (78, 88), und
- Verbinden des gewickelten Spulendrahtes (94) mit den elektrischen Anschlüssen (74).

2. Verfahren nach Anspruch 1, wobei der Spulenkörper (78, 88) mittels eines Spritzpressvorgangs geformt wird.

3. Verfahren nach Anspruch 1 oder 2, wobei der Spulenkörper (78, 88) ein duroplastisches Material umfasst.

4. Verfahren nach Anspruch 3, wobei der Spulenkörper (78, 88) ein Harzsystem umfasst.

5. Verfahren nach einem der vorstehenden Ansprüche, umfassend:
- Formen eines Gehäusekörpers (96) um den Spulenkörper (78, 88) mit dem gewickelten und mit den elektrischen Anschlüssen (74) verbundenen Spulendraht (94).

6. Verfahren nach Anspruch 5, wobei der Spulenkörper (78, 88) und der Gehäusekörper (96) aus einem Material mit einem gleichen Wärmeausdehnungskoeffizienten ausgebildet werden.

7. Verfahren nach Anspruch 6, wobei der Spulenkörper (78, 88) und der Gehäusekörper (96) aus einem gleichen Material ausgebildet werden.

8. Verfahren nach einem der vorstehenden Ansprüche, umfassend:
- Anordnen eines elektrisch leitfähigen Blechs (98) zwischen einem Kontaktierpunkt der elektrischen Anschlüsse (74) mit einer Leiterplatte (42) und dem Spulenkörper (78, 88),
- wobei der Gehäusekörper (96) um das leitfähige Blech (98) geformt wird.

9. Verfahren nach einem der vorstehenden Ansprüche, wobei das Formen des Spulenkörpers (78, 88) um den magnetischen Kern (76) die Schritte
- Formen eines Aufnahmekörpers (78) mit einer Ausnehmung (86),
- Einlegen des magnetischen Kerns (76) in die Ausnehmung (86) und
- Verschließen der Ausnehmung (86) mit dem aufgenommenen magnetischen Kern (76) umfasst.

10. Verfahren nach Anspruch 9, umfassend
- Auflegen eines mechanischen Enkopplungsmaterials auf den magnetischen Kern (76) vor dem Verschließen der Ausnehmung (86).

11. Verfahren nach einem der vorstehenden Ansprüche, umfassend:
- Anordnen eines Umlenkpins (100) auf dem Spulenkörper (78, 88), und
- Verbinden des gewickelten Spulendrahtes (94) mit einem der elektrischen Anschlüsse (74) über den Umlenkpin (100).

12. Messaufnehmer (48), der mit einem Verfahren nach einem der vorstehenden Ansprüche hergestellt ist, umfassend:
- die elektrischen Anschlüsse (74) und den magnetische Kern (76),
- der Spulenkörper (78, 88), der derart um den magnetischen Kern geformt ist, dass der magnetische Kern vom Spulenkörper wenigstens teilweise umhüllt und der magnetische Kern durch einen Formschluss im Spulenkörper gehalten ist und die elektrischen Anschlüsse vom Spulenkörper gehalten sind,
- den Spulendraht (94), der die Spule (90, 92) bildet und der auf den geformten Spulenkörper gewickelt ist, und
- die Verbindung des gewickelten Spulendrahtes mit den elektrischen Anschlüssen.

## Claims

1. Method for producing a coil (90, 92) as measuring pickup for a sensor (4), comprising:
- arranging electrical connections (74) and a magnetic core (76) for the coil (90, 92),
- forming a coil former (78, 88) around the magnetic core (76) by a moulding process in such a way that the magnetic core (76) is at least partially enveloped by the coil former (78, 88) and the magnetic core is held by a form fit in the coil former, and the electrical connections (74) are held by the coil former (78, 88),
- winding at least one coil wire (94) onto the coil former (78, 88) formed, and
- connecting the wound coil wire (94) to the electrical connections (74).

2. Method according to Claim 1, wherein the coil former (78, 88) is formed by means of a transfer molding process.

3. Method according to Claim 1 or 2, wherein the coil former (78, 88) comprises a thermosetting plastic material.

4. Method according to Claim 3, wherin the coil former (78, 88) comprises a resin system.

5. Method according to one of the preceding claims, comprising:
- forming a housing body (96) around the coil former (78, 88) with the wound coil wire (94) which is connected to the electrical connections (74) .

6. Method according to Claim 5, wherein the coil former (78, 88) and the housing body (96) are formed from a material having an identical coefficient of thermal expansion.

7. Method according to Claim 6, wherein the coil former (78, 88) and the housing body (96) are formed from an identical material.

8. Method according to one of the preceding claims, comprising:
- arranging an electrically conductive metal sheet (98) between a contact-making point between the electrical connections (74) and a printed circuit board (42) and the coil former (78, 88),
- wherein the housing body (96) is formed around the conductive metal sheet (98).

9. Method according to one of the preceding claims, wherein the forming of the coil former (78, 88) around the magnetic core (76) comprises the steps of
- forming a receiving body (78) with a cutout (86),
- inserting the magnetic core (76) into the cutout (86), and
- closing the cutout (86) with the received magnetic core (76).

10. Method according to Claim 9, comprising
- applying a mechanical decoupling material to the magnetic core (76) prior to closing of the cutout (86) .

11. Method according to one of the preceding claims, comprising:
- arranging a deflection pin (100) on the coil former (78, 88), and
- connecting the wound coil wire (94) to one of the electrical connections (74) via the deflection pin (100).

12. Measuring pickup (48), which is produced using a method according to one of the preceding claims, comprising:
- the electrical connections (74) and the magnetic core (76),
- the coil former (78, 88) which is formed around the magnetic core in such a way that the magnetic core is at least partially enveloped by the coil former and the magnetic core is held by a form fit in the coil former and the electrical connections are held by the coil former,
- the coil wire (94) which forms the coil (90, 92) and which is wound onto the coil former formed, and
- the connection of the wound coil wire to the electrical connections.

## Revendications

1. Procédé de fabrication d'une bobine (90, 92) en tant qu'enregistreur de mesure pour un capteur (4), comprenant :
- l'arrangement de bornes électriques (74) et d'un noyau magnétique (76) pour la bobine (90, 92),
- le façonnage d'un corps de bobine (78, 88) autour du noyau magnétique (76) par une opération de moulage de telle sorte que le noyau magnétique (76) est au moins partiellement enveloppé par le corps de bobine (78, 88) et le noyau magnétique est maintenu dans le corps de bobine par une complémentarité de formes, et les bornes électriques (74) sont maintenues par le corps de bobine (78, 88),
- l'enroulement d'au moins un fil de bobine (94) sur le corps de bobine (78, 88) façonné, et
- la connexion du fil de bobine (94) enroulé aux bornes électriques (74).

2. Procédé selon la revendication 1, le corps de bobine (78, 88) étant façonné au moyen d'une opération de moulage par injection.

3. Procédé selon la revendication 1 ou 2, le corps de bobine (78, 88) comprenant une matière thermodurcissable.

4. Procédé selon la revendication 3, le corps de bobine (78, 88) comprenant un système de résine.

5. Procédé selon l'une des revendications précédentes, comprenant :
- façonnage d'un corps de boîtier (96) autour du corps de bobine (78, 88) avec le fil de bobine (94) enroulé et connecté aux bornes électriques (74).

6. Procédé selon la revendication 5, le corps de bobine (78, 88) et le corps de boîtier (96) étant réalisés dans une matière ayant un coefficient de dilatation thermique identique.

7. Procédé selon la revendication 6, le corps de bobine (78, 88) et le corps de boîtier (96) étant réalisés dans une même matière.

8. Procédé selon l'une des revendications précédentes, comprenant :
- la disposition d'une tôle (98) électriquement conductrice entre un point de mise en contact des bornes électriques (74) avec un circuit imprimé (42) et le corps de bobine (78, 88),
- le corps de boîtier (96) étant façonné autour de la tôle (98) conductrice.

9. Procédé selon l'une des revendications précédentes, le façonnage du corps de bobine (78, 88) autour du noyau magnétique (76) comprenant les étapes suivantes
- façonnage d'un corps d'accueil (78) doté d'une cavité (86),
- insertion du noyau magnétique (76) dans la cavité (86) et
- fermeture de la cavité (86) avec le noyau magnétique (76) accueilli.

10. Procédé selon la revendication 9, comprenant
- la dépose d'une matière de découplage mécanique sur le noyau magnétique (76) avant la fermeture de la cavité (86) .

11. Procédé selon l'une des revendications précédentes, comprenant :
- la disposition d'une broche de renvoi (100) sur le corps de bobine (78, 88), et
- la connexion du fil de bobine (94) enroulé à l'une des bornes électriques (74) par le biais de la broche de renvoi (100).

12. Enregistreur de mesure (48) qui est fabriqué avec un procédé selon l'une des revendications précédentes, comprenant :
- les bornes électriques (74) et le noyau magnétique (76),
- le corps de bobine (78, 88), qui est façonné autour du noyau magnétique de telle sorte que le noyau magnétique est au moins partiellement enveloppé par le corps de bobine et le noyau magnétique est maintenu dans le corps de bobine par une complémentarité de formes, et les bornes électriques sont maintenues par le corps de bobine,
- le fil de bobine (94), qui forme la bobine (90, 92) et qui est enroulé sur le corps de bobine façonné, et
- la connexion du fil de bobine enroulé aux bornes électriques.
